# EUROPEAN PATENT APPLICATION

(11) **EP 4 718 422 A1**
(43) Date of publication of application: **01.04.2026**
(21) Application number: 23945939.9
(22) Date of filing: 31.10.2023
(51) Int. Cl.: G09B 5/04, G09B 7/04

(54) **LEARNING ASSISTANCE SYSTEM**

(30) Priority: 14.07.2023 JP 2023115870; 14.07.2023 JP 2023115871; 14.07.2023 JP 2023115872
(71) Applicant: Umelabo Co., Ltd., Osaka-shi, Osaka 541-0044 (JP)
(72) Inventor: UMEZAKI Yusuke, Osaka-shi, Osaka 541-0044 (JP)
(74) Representative: Rybarczyk, Dariusz Pawel
(86) International application number: PCT/JP2023/039213
(87) International publication number: WO 2025/017937

(57) **Abstract**

[Problem] To provide a learning assistance system that enables problems answered incorrectly to be presented along with similar problems the next time learning is performed. [Solution] A learning assistance system 10 includes: a problem storage unit 12 in which are registered a plurality of problems and answers corresponding to the plurality of problems for a learner 4 to learn knowledge; a problem presentation interval deciding unit 14 which decides a problem presentation interval so as to increase a learning effect of the learner 4 when deciding a date for presenting each of the plurality of problems; a similar-problem early-presentation adjusting unit 17 which adjusts the problem presentation interval to adjust the date for presenting a problem that is similar to a problem that the learner 4 answered incorrectly, so as to be presented earlier than a planned presentation date and to be aligned with the presentation date of the problem that was answered incorrectly; and a problem presenting unit 18 which presents each problem to the learner 4 on the basis of the problem presentation interval decided or adjusted by the problem presentation interval deciding unit 14 and the similar-problem early-presentation adjusting unit 17.

## Description

### TECHNICAL FIELD

The present invention relates to learning support systems.

### BACKGROUND ART

Traditionally, learners learned through paper-based media, but with the developments in digital technology, software and other means for learning have been developed. As technology related to the present invention, for example, Patent Document 1 describes a learning device characterized in comprising: question storing means that stores questions corresponding to question numbers assigned to each of the questions; correct-answer storing means that stores correct answers to each of the questions corresponding to the question numbers; explanation storing means that stores explanations for each of the questions corresponding to the question numbers; question displaying means that displays the questions stored in the question storing means; answer inputting means that inputs answers to the questions displayed by the question displaying means; scoring means that compares the correct answers stored in the correct-answer storing means with the answers input by the answer inputting means and scores the answers to the questions; and answer displaying means that, if the answers scored by the scoring means are correct, displays the correct answers stored in the correct-answer storing means, and if the answers are incorrect, displays the explanations stored in the explanation storing means.

### RELATED ART DOCUMENTS

### PATENT DOCUMENT

### Patent Document 1: JP 2004-29649 A

### SUMMARY OF THE INVENTION

### PROBLEM TO BE SOLVED BY THE INVENTION

While it is possible to study using a learning support device such as the software disclosed in Patent Document 1 for example, similar questions are likely to be present among the questions registered in such learning support devices. Questions which the learner are good at should not matter, whereas it is expected that questions that are easy to get wrong can be better understood by solving similar questions together.

An objective of the present invention is to provide a learning support system that enables submitting a question that has been answered incorrectly together with similar questions during subsequent learning sessions.

### MEANS FOR SOLVING THE PROBLEMS

A learning support system involving the present invention comprises: a question storage unit in which a plurality of questions for a learner to acquire knowledge and answers respectively corresponding to the plurality of questions; a question interval determination unit configured to determine, in determining a date for submitting each of the plurality of questions, a question interval such that an effect of learning by the learner is enhanced; a similar question advanced submission adjustment unit configured to adjust the question interval such that a next submission date of questions similar to a question incorrectly answered by the learner is advanced ahead of schedule to align with a next submission date of the incorrectly answered question; and a question submission unit configured to submit each of the questions to the learner, based on the question interval determined or adjusted by the question interval determination unit and the similar question advanced submission adjustment unit.

With the learning support system involving the present invention, it is preferable that the similar question advanced submission adjustment unit be configured to adjust advanced submission of a question with a higher degree of similarity among the similar questions, if a response to the incorrectly answered question is made at least two times, and a correct answer rate is at a predetermined value or below.

Also with the learning support system involving the present invention, it is preferable that the similar question advanced submission adjustment unit be configured to adjust the advanced submission of a question, among the similar questions, the question interval of which is within a predetermined period.

A learning support system involving the present invention comprises: a question storage unit in which a plurality of questions for a learner to acquire knowledge and answers respectively corresponding to the plurality of questions; a question interval determination unit configured to determine, in determining a date for submitting each of the plurality of questions, a question interval such that an effect of learning by the learner is enhanced; a submission date unification adjustment unit configured to adjust the question interval such that submission dates of a question correctly answered by the learner and similar questions are unified; and a question submission unit configured to submit each of the questions to the learner, based on the question interval determined or adjusted by the question interval determination unit and the submission date unification adjustment unit.

With the learning support system involving the present invention, it is preferable that if the submission dates of the questions similar to the question correctly answered by the learner are present within a predetermined range based on the next submission date of the correctly answered question, the submission date unification adjustment unit be configured to adjust the question interval such that the submission date of the correctly answered question and the questions similar to each other are aligned.

Also with the learning support system involving the present invention, it is preferable that the predetermined range be determined based on a value obtained by dividing the question interval by a predetermined value.

A learning support system involving the present invention comprises: a question storage unit in which a plurality of questions for a learner to acquire knowledge and answers respectively corresponding to the plurality of questions; a question interval determination unit configured to determine, in determining a date for submitting each of the plurality of questions, a question interval such that an effect of learning by the learner is enhanced; a submission efficiency adjustment unit configured to adjust the question interval by multiplying by a predetermined adjustment value such that submission of a plurality of questions is delayed if a correct answer rate of the plurality of similar questions exceeds a predetermined reference value; and a question submission unit configured to submit each of the questions to the learner, based on the question interval determined or adjusted by the question interval determination unit and the submission efficiency adjustment unit.

With the learning support system involving the present invention, it is preferable that the submission efficiency adjustment unit be configured to delay, if an average correct answer rate, obtained by averaging per-question-basis correct answer rates when the plurality of similar questions are each solved multiple times, exceeds the predetermined reference value, the submission date by multiplying the predetermined adjustment value, which is obtained by dividing the average correct answer rate by a predetermined value, by a number of days until the next submission of each question.

Also with the learning support system involving the present invention, it is preferable that the submission efficiency adjustment unit be configured to determine the predetermined value such that the adjustment value is between 1 and 2.

### EFFECTS OF THE INVENTION

The present invention enables submitting a question that has been answered incorrectly together with similar questions during subsequent learning sessions.

### BRIEF DESCRIPTION OF DRAWINGS

Fig. 1 is a diagram illustrating a learning support system of an embodiment involving the present invention.
Fig. 2 is a diagram illustrating a situation in which a question has been submitted using the learning support system of the embodiment involving the present invention.
Fig. 3 is a diagram illustrating a situation in which the question submitted using the learning support system of the embodiment involving the present invention has been answered.
Fig. 4 is a diagram illustrating a situation in which the learning support system of the embodiment involving the present invention is used to register a question.
Fig. 5 is a diagram illustrating a situation in which the question registered using the learning support system of the embodiment involving the present invention has been submitted.
Fig. 6 is a diagram illustrating a situation in which the question submitted using the learning support system of the embodiment involving the present invention has been answered.
Fig. 7 is a diagram illustrating a situation in which the learning support system of the embodiment involving the present invention is used to set a multiplying factor, etc.
Fig. 8 is a diagram illustrating a situation in which three questions that are similar to each other and are submitted using the learning support system of the embodiment involving the present invention are displayed.
Fig. 9 is a diagram illustrating a learning support system of an embodiment involving the present invention.
Fig. 10 is a diagram illustrating a learning support system of an embodiment involving the present invention.

### DESCRIPTION OF EMBODIMENT

Hereinafter, a mode of embodying the present invention is explained in detail with reference to the accompanying drawings. In the following, like elements are assigned the same reference numerals in all the figures in the drawings, and a repeated description is omitted. In addition, in the description in the text, the reference numerals mentioned previously are used if necessary.

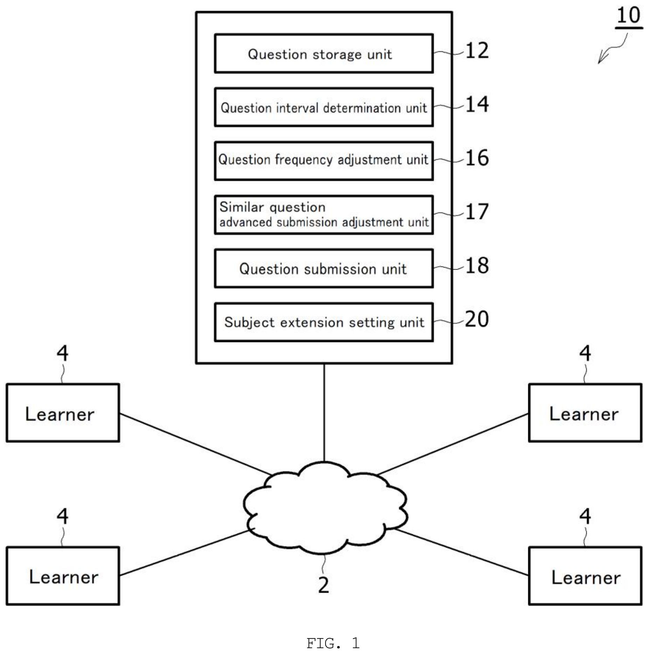

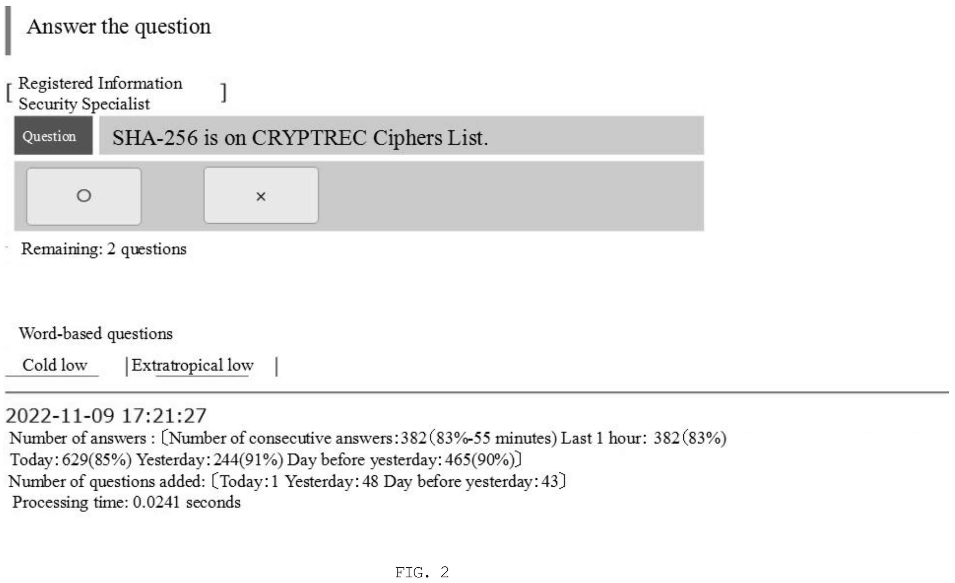

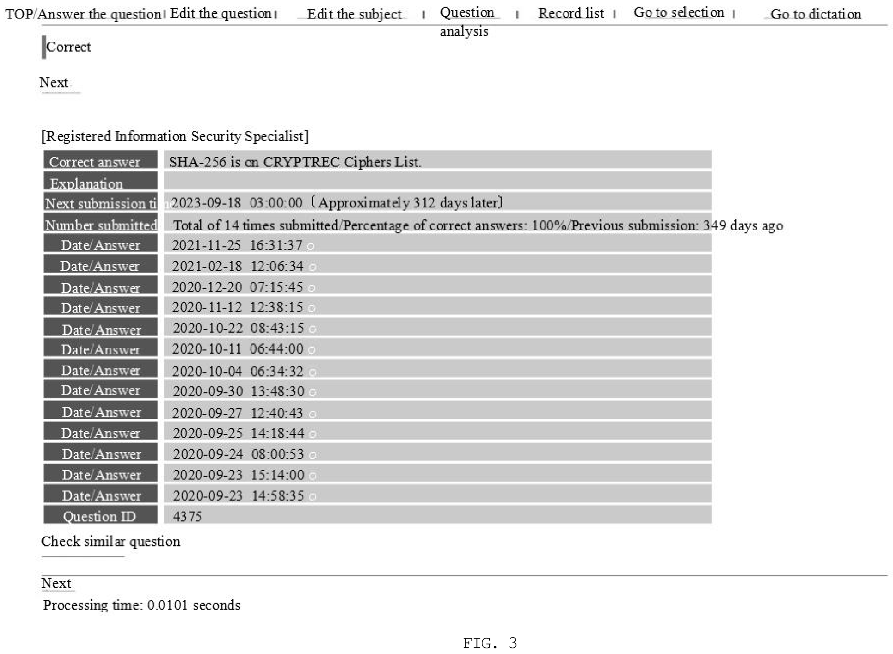

Fig. 1 is a diagram illustrating a learning support system 10 of an embodiment involving the present invention. Fig. 2 is a diagram illustrating a situation in which a question has been submitted using the learning support system 10 of the embodiment involving the present invention. Fig. 3 is a diagram illustrating a situation in which the question submitted using the learning support system 10 of the embodiment involving the present invention has been answered.

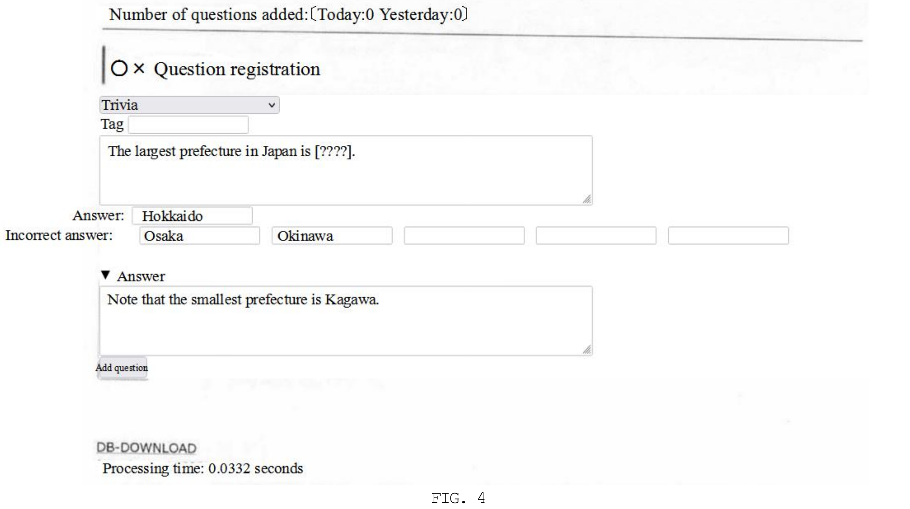

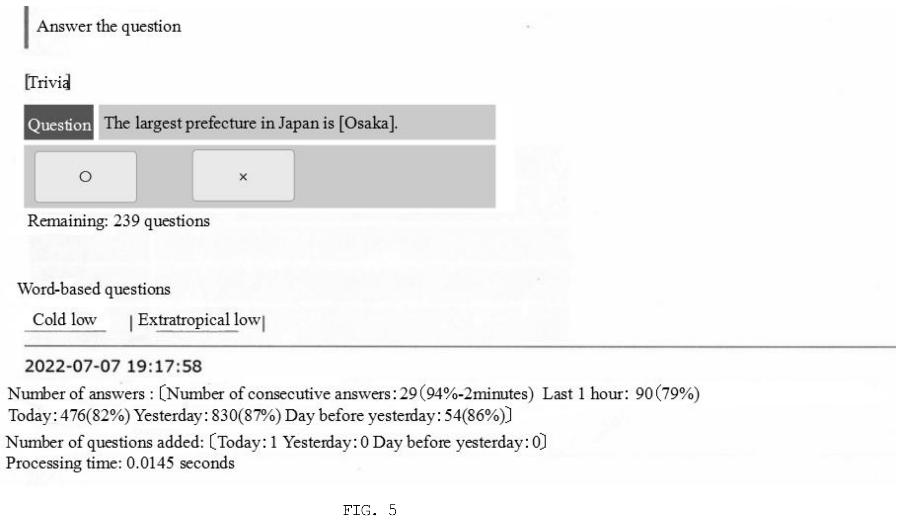

Fig. 4 is a diagram illustrating a situation in which the learning support system 10 of the embodiment involving the present invention is used to register a question. Fig. 5 is a diagram illustrating a situation in which the question registered using the learning support system 10 of the embodiment involving the present invention has been submitted.

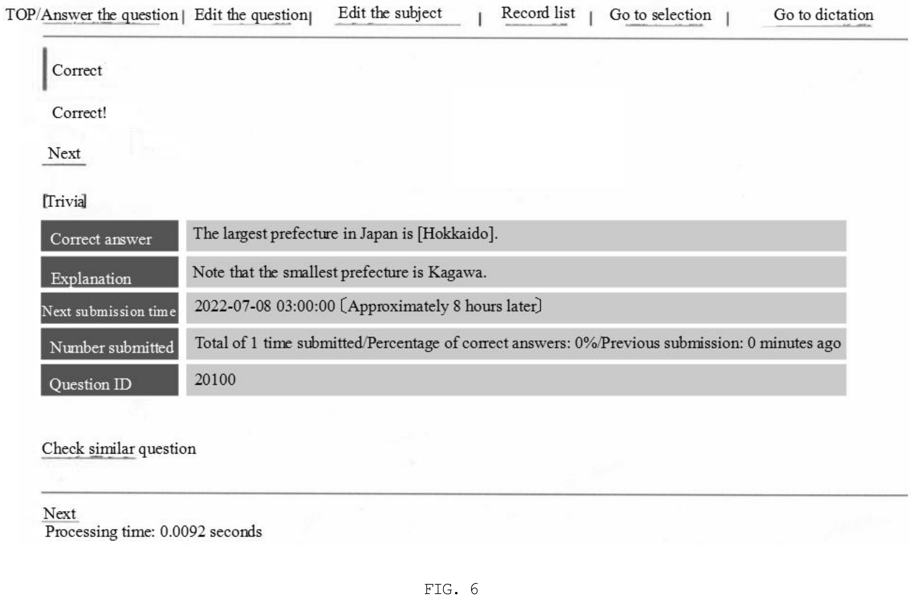

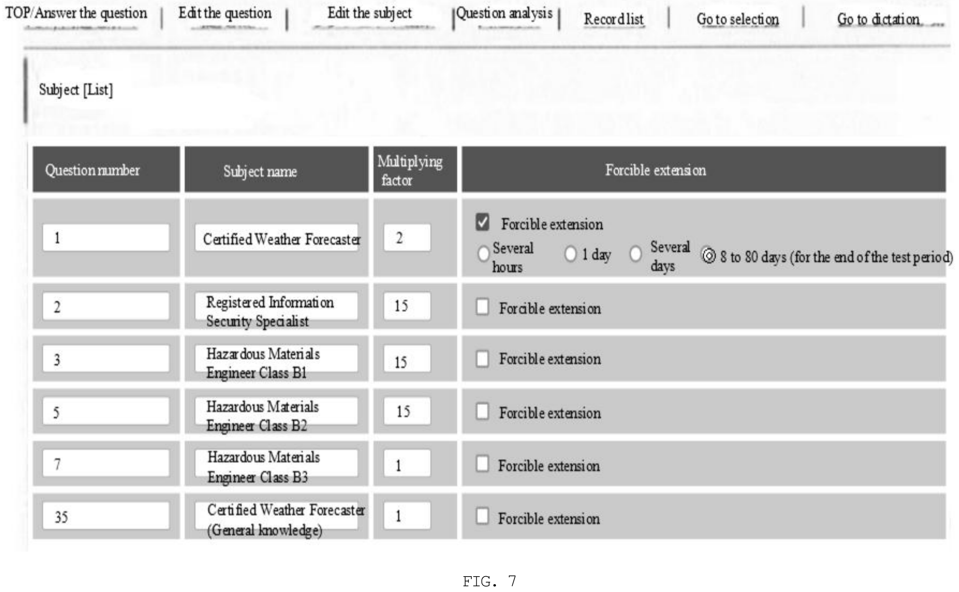

Fig. 6 is a diagram illustrating a situation in which the question submitted using the learning support system 10 of the embodiment involving the present invention has been answered. Fig. 7 is a diagram illustrating a situation in which the learning support system 10 of the embodiment involving the present invention is used to set a multiplying factor, etc.

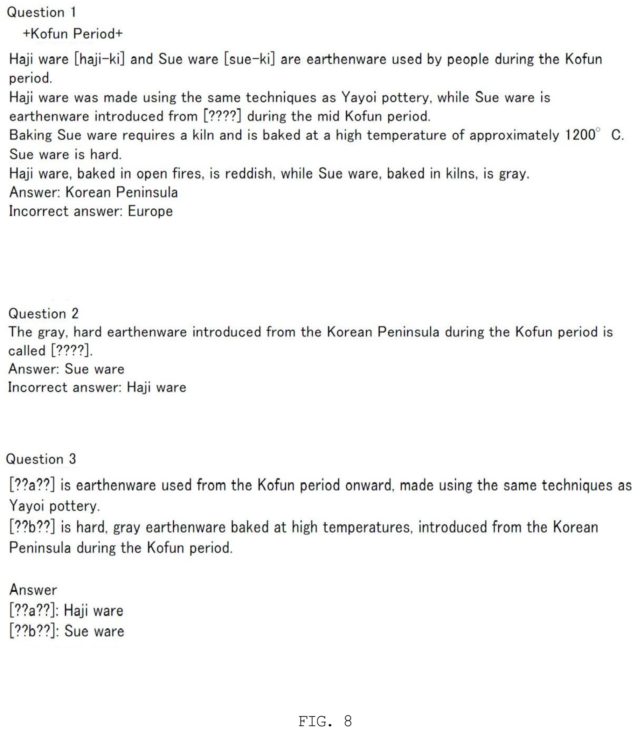

Fig. 8 is a diagram illustrating a situation in which three questions that are similar to each other and are submitted using the learning support system 10 of an embodiment involving the present invention are displayed.

The learning support system 10 is a system to help a learner 4 learn efficiently for lifelong learning. The learning support system 10 includes a question storage unit 12, a question interval determination unit 14, a question frequency adjustment unit 16, a similar question advanced submission adjustment unit 17, a question submission unit 18, and a subject extension setting unit 20.

The question storage unit 12 has a function for registering a plurality of questions for the learner 4 to acquire knowledge and answers respectively corresponding to the plurality of questions. Here, as illustrated in Fig. 4, description is given of an instance in which the learner 4 himself/herself can create and register questions that he/she wishes to study, but questions prepared in advance may also be registered.

In the example illustrated in Figs. 4 and 5, the question "Osaka is the prefecture having the largest area in Japan" is to be answered with ○ or × . Here, if × is selected, "correct" is displayed, as illustrated in Fig. 6. Naturally, since the correct answer to this question is "Hokkaido, " the correct answer is displayed and, as related information, the fact that the prefecture having the smallest area is "Kagawa" is also displayed.

Questions registered by the question storage unit 12 are classified into a plurality of subjects. The subjects may be classified as, for example, Japanese history, world history, English, mathematics, chemistry, physics, biology, intellectual property, etc., as well as by qualifications such as Certified Weather Forecasters, Registered Information Security Specialist, Real Estate Notary, Patent Attorney, Certified Administrative Procedures Legal Specialist, etc.

In determining a date and time for submitting each of the plurality of questions, the question interval determination unit 14 has a function of determining a question interval so as to enhance the learning effect of the learner 4 on the basis of the Ebbinghaus' forgetting curve. The Ebbinghaus' forgetting curve is a graph that plainly represents the mechanism through which people forget, with "savings" on the vertical axis and "time" on the horizontal axis.

On the basis of the Ebbinghaus' forgetting curve, the question interval determination unit 14 can set an interval so that learnt contents are efficiently retained. For example, the interval can be set as follows: 10 minutes, until 3:00 the next morning, 5 to 6 days, 10 to 14 days, 15 to 20 days, and 21 to 28 days, after learning. While the interval is set in this way, if the learner makes a mistake on a question, the frequency of the question returns to the beginning, that is, the question is submitted 10 minutes later, at 3:00 the next morning, and so on.

The question interval determination unit 14 can set a question interval to 34 to 39 days, 40 to 50 days, 51 to 79 days, and 80 to 90 days if the percentage of correct answers remains 70% or above, and thereafter, if the percentage of correct answers is 90% or higher, can set a question interval, for example, by using the following formula: 864, 00 seconds x (random number (75-90) + (number of correct answers x 3)).

The question frequency adjustment unit 16 multiplies the question interval for questions of low learning need for the learner 4 by a predetermined multiplying factor so as to reduce the frequency of the questions of low need. The predetermined multiplying factor here is described as being set on a per-subject basis, but it may also be set on a per-question basis.

For example, a person who has passed the qualification examination for Registered Information Security Specialist has already acquired the knowledge for this qualification examination, so there is little need to re-solve the questions frequently, and it would be more efficient to spend the time for other studies.

However, if he/she stops studying at all, there is a possibility that his/her knowledge will be lost. Therefore, for example, as illustrated in Fig. 7, the question interval for questions for Registered Information Security Specialist is multiplied by a predetermined multiplying factor (e.g., 15 times) to increase the interval. In this way, the question frequency adjustment unit 16 allows for setting of the predetermined multiplying factor on a per-subject (e.g., Registered Information Security Specialist) basis.

Specifically, multiplying the period of the question interval by the predetermined multiplying factor allows for adjustment such that, for example, a question originally to be submitted in 30 days will be submitted in one year. This has the advantage that questions registered several years ago will be submitted at a time when the learner has almost forgotten about them, and thereby the memory retention is improved.

For example, if the number of seconds until the question is submitted is 2, 937, 600 seconds (34 days) and the multiplying factor is 15, the question can be adjusted so that it is not submitted for 2,937,600 seconds x 15 = 44,064,000 seconds (510 days), i.e., more than one year.

The advantage is that while spending time on questions of high need, the learner can also learn questions of low need at a reduced frequency as described above so that the knowledge is not lost, which serves lifelong learning.

As the number of registered questions increases, a large number of questions may be submitted in a day, which may discourage learner 4 from learning. However, by making adjustment as described above, it is possible to distribute submission of the registered questions and keep the willingness for learning of the learner 4.

The question frequency adjustment unit 16 has an additional function of adding 5 to 7 days to the question interval when the number of correct answers is 12 or more. This is because it is judged that frequent submission of questions that have been answered correctly 12 or more times in the past will not affect learning.

Furthermore, the question frequency adjustment unit 16 has an additional function of adding 1 to 2 days to the question interval if the number of correct answers is less than 12 but the multiplying factor is 2 or greater. This is because it is judged that even if the number of correct answers is less than 12, when the multiplying factor is 2 or greater, there is little need to rush to re-submit the question.

The question frequency adjustment unit 16 has an additional function of providing a time difference of approximately 5 hours for each question if the next submission is due in 24 hours or later. This process ensures that the questions are not concentrated at a specific time, but are distributed.

The question frequency adjustment unit 16 has an additional function of setting the date and time of the next submission to 300 to 360 days, up to 360 days, if the number of correct answers is 16 or less. Multiplication by a multiplying factor as described above may result in an extremely long question interval, such as 510 days before submission. The reason for this is to ensure that adjustments are made such that questions are always submitted at least once a year, because questions that are registered near the end of the qualification examinations, the examination for which is held immediately after, and the multiplying factor for which is set high may be particularly subject to an extreme drop in the number submitted.

Furthermore, the question frequency adjustment unit 16 sets the upper limit of the interval to 1820 days, if the number of correct answers exceeds 16 times, and the interval is 1820 days or more. This is because even if the number of correct answers is many, without the upper limit of approximately 1820 days (5 years), there is a possibility that the memory cannot be maintained.

The question frequency adjustment unit 16 has an additional function of adding 6 to 7 days if the next submission is due in 3 days or later and between December 31 and January 4. This process is based on the assumption that the learner 4 may wish to take a break during the year-end and New Year holidays. It should be noted that with the limitation of 3 days or later, it does not mean that the question will not be submitted at all.

The question frequency adjustment unit 16 has an additional function of adding 2 to 5 days if the next submission is due in 8 days or later and on a Saturday or Sunday. The reason for this process is based on an assumption that the learner 4 may wish to take a break on Saturdays and Sundays.

Furthermore, the question frequency adjustment unit 16 has an additional function of adding or subtracting 1 day if the next submission is due in 20 days or later and on a Wednesday. This is based on an assumption that slightly reducing the frequency of the questions on Wednesdays may help the learner 4 maintain his/her motivation to study.

The question frequency adjustment unit 16 has an additional function of standardizing the time of the submission at, for example, 3:00 a.m., if the next submission is due in 3 days or later. This is to prevent the learner 4 from feeling stressed when the number of questions exceeds 100, and even after all the questions have been answered correctly, different questions are submitted soon afterwards.

The similar question advanced submission adjustment unit 17 has a function of adjusting the question interval so that the submission date of questions similar to a question that the learner 4 has answered incorrectly is advanced ahead of schedule, to align the submission date with that of the incorrectly answered question.

The learning support system 10 is a system that allows the learner 4 to learn repeatedly and efficiently in order to engage in lifelong learning, wherein in the question storage unit 12, questions of various categories are registered, and among these questions, there are similar questions that are similar to each other. Aligning the submission dates of these similar questions allows the learner 4 to solve questions based on the same concepts, making it easier to provide insights to him/her and enabling more efficient learning.

Here, the question interval determination unit 14 sets the question interval using random numbers in the question interval determination unit 14, so that similar questions are also submitted separately. Furthermore, when the multiplying factor function of the question frequency adjustment unit 16 is used, the probability of similar questions being submitted in scattered order increases. In such circumstances, there is a risk of missing the opportunity to gain insights by solving similar questions at the same point.

For example, when three questions as illustrated in Fig. 8 are registered in the question storage unit 12, the three questions are submitted separately according to the random numbers or the like in the question interval determination unit 14. Here, among the three questions illustrated in Fig. 8, Question 1 contains the most characters and discloses the most detailed information. If history studies are insufficient, the correct answer rate of Question 2, which contains less information than Question 1, may decrease.

When Question 2 is submitted immediately after Question 1, comprehension of the learner 4 is enhanced, or conversely, even when Question 1 is submitted after Question 2, submitting both the questions on the same day is likely to facilitate understanding. However, when random numbers are used to determine the question intervals, there is no guarantee that Question 1 and Question 2 will be submitted consecutively.

Furthermore, since Question 1 contains more detailed information than Question 2, if the rate of consecutive correct answers for Question 1 increases, the frequency of Question 1 being asked will decrease, and there is a risk that only Question 2 will be submitted repeatedly. Even though random numbers are used to determine question intervals, in view of the long span of lifelong learning, the possibility of question dates coinciding is low, if not zero, which cannot be regarded as an efficient learning circumstance. Consequently, with the function of the similar question advanced submission adjustment unit 17, the scheduled submission date and time for questions deemed sufficiently similar is advanced when a question is answered incorrectly.

In addition, the similar question advanced submission adjustment unit 17 has a function of adjusting the advanced submission of question with a high degree of similarity among similar questions if a response to an incorrectly answered question is made two or more times and the correct answer rate is 80% or less. The similar question advanced submission adjustment unit 17 adjusts the advanced submission of questions, as subject to advanced submission, that are similar to each other and the question interval of which is within a predetermined period (for example, within 30 days).

Here, the method for determining similar questions is to use the registered questions that the learner 4 has linked to questions that he/she considers similar, but since relying solely on manual registration places a heavy burden on the learner 4, it is preferable that automatic determination or the like be used as appropriate. For example, similarity determination may be carried out automatically using string analysis technology, or the like, by sorting questions in descending order of degree of similarity and determining the top eight questions as similar.

For example, when the scheduled submission date and time for incorrectly answered Question 2 is in 10 minutes, the original scheduled submission date and time for Question 1 is in 86,400 seconds (in 2 days), and the original scheduled submission date and time for Question 3 is in 172, 800 seconds (in 3 days), then instead of simply aligning the scheduled submission date and time for Question 2 and Question 3 with that for Question 2, the scheduled submission date for the three questions may be determined with the average or median. With the average, it will be in 86, 600 seconds (in about one day) .

It is preferable that the maximum number of questions subject to advanced submission per day by the function of the similar question advanced submission adjustment unit 17 be limited to approximately 60 questions, and once the number of questions exceeds half of the maximum number for the advanced submission, restrictions, such as reducing the frequency of advanced submission, be imposed.

The question submission unit 18 has a function of submitting questions to the learner 4, on the basis of the question interval decided or adjusted by the question interval determination unit 14, the question frequency adjustment unit 16, and the similar question advanced submission adjustment unit 17.

Specifically, after the learner 4 registers a question that he/she wishes to learn as illustrated in Fig. 4, the question will be submitted to a terminal (smartphone, tablet device, or personal computer) of the learner 4 at intervals such as 10 minutes, until 3:00 the next morning, 5 to 6 days, 10 to 14 days, 15 to 20 days, and 21 to 28 days.

The question submission unit 18 has an additional function of selecting a plurality of questions from among the questions the next scheduled submission date of which is within a given period, and submitting them ahead of schedule. Specifically, similar questions that have been judged by the similar question advanced submission adjustment unit 17 to require advanced submission are submitted.

The subject extension setting unit 20 has a function of adding a predetermined period on a per-subject basis to a question interval. As illustrated in Fig. 7, the subject extension setting unit 20, having as the time to be forcibly extended, options such as a few hours, 1 day, a few days, and 8 to 80 days, adds a selected extension period to the question interval.

For example, extension of time is available for 1 day when the learner decides that he/she is busy today, for a few days when he/she feels like taking a few days off, or for 8 to 80 days when he/she decides that there is little need to study because there are no exams for a certain period of time.

The operation of the learning support system 10 in the above configuration will now be explained. The learner 4 creates questions related to the learning contents that he/she considers himself/herself to study, and as illustrated in Fig. 4, registers the questions himself/herself.

After registration by the learner 4 himself/herself, the questions will be submitted to a terminal (smartphone, tablet device, or personal computer) of the learner 4 at intervals such as 10 minutes, until 3:00 the next morning, 5 to 6 days, 10 to 14 days, 15 to 20 days, and 21 to 28 days.

The above intervals are set so that the memory retention of the learnt contents is appropriate on the basis of the Ebbinghaus' forgetting curve, enabling the learner 4 to learn efficiently.

However, as the number of questions the learner 4 has registered increases, the number of questions submitted in a day also increases, by which the learner 4 may be discouraged from learning, resulting in decrease in learning efficiency. For example, a person who has passed the qualification examination for Registered Information Security Specialist has already acquired the knowledge for this qualification examination, so there is little need to re-solve the questions frequently, and it would be more efficient to spend the time for other studies.

However, if he/she stops studying at all, there is a possibility that his/her knowledge will be lost. Therefore, for example, as illustrated in Fig. 7, the question interval for questions for Registered Information Security Specialist is multiplied by a predetermined multiplying factor (e.g., 15 times) to increase the interval. In this way, the question frequency adjustment unit 16 allows for setting of the predetermined multiplying factor on a per-subject (e.g., Registered Information Security Specialist) basis. This has the advantage that questions registered several years ago will be submitted at a time when the learner has almost forgotten about them, and thereby the memory retention is improved.

According to the learning support system 10, the advantage is that while spending time on questions of high need, the learner can also learn questions of low need at a reduced frequency as described above so that the knowledge is not lost, which serves lifelong learning.

Also according to the learning support system 10, extension of time is available for 1 day when the learner decides that he/she is busy today, for a few days when he/she feels like taking a few days off, or for 8 to 80 days when he/she decides that there is little need to study because there are no exams for a certain period of time, so that the learner can continue studying within a reasonable range. Therefore the system is suitable for lifelong learning.

As described above, while the learning support system 10 is suitable for lifelong learning, the question intervals are changed according to the random numbers, the multiplying factors, or the like, and thus questions similar to each other are often submitted separately. However, as mentioned above, it is expected that questions can be better understood by solving similar questions together on the same day.

Here, according to the learning support system 10, with the function of the similar question advanced submission adjustment unit 17, the question interval can be adjusted so that the submission date of questions similar to the questions that the learner 4 has answered incorrectly is advanced ahead of schedule, to align the submission date with that of the incorrectly answered questions.

This yields the advantage that when learners re-solve incorrectly answered questions, similar questions related to these will be submitted on the same day, allowing them to understand the relationships between the questions, thereby improving their comprehension.

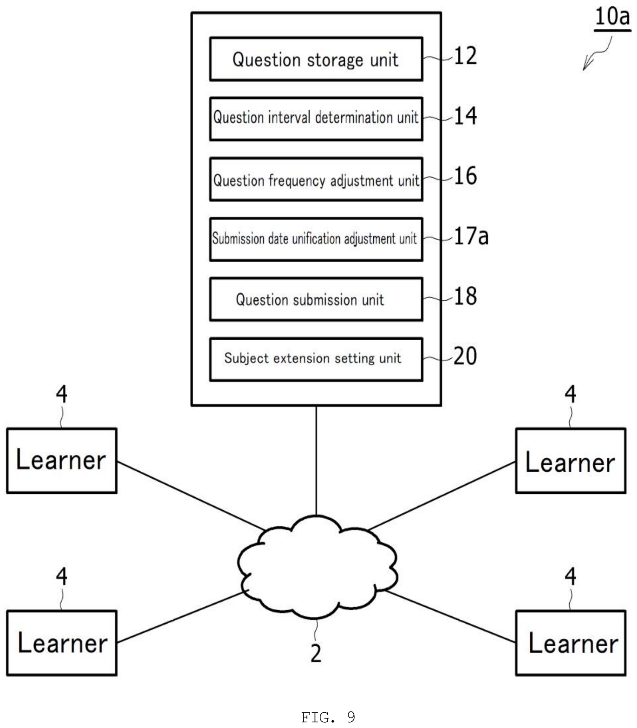

Fig. 9 is a diagram illustrating a learning support system 10a involving the present invention. The learning support system 10a includes a question storage unit 12, a question interval determination unit 14, a question frequency adjustment unit 16, a submission date unification adjustment unit 17a, a question submission unit 18, and a subject extension setting unit 20. Here, the difference of the learning support system 10a from the learning support system 10 is the submission date unification adjustment unit 17a, and therefore the explanation will mainly focus on the submission date unification adjustment unit 17a.

The submission date unification adjustment unit 17a has a function of adjusting the question interval so that the submission dates of a question that the learner 4 has answered correctly and the similar questions are unified.

Specifically, if the submission date of questions similar to the question that the learner has answered correctly is present within a predetermined range based on the next submission date of the correctly answered question, the submission date unification adjustment unit 17a adjusts the question interval so that the submission dates of the correctly answered question and the questions similar to this are aligned. The predetermined range is determined on the basis of the value obtained by dividing the question interval by a predetermined value.

For example, it is assumed that Question 1, Question 2, and Question 3 illustrated in Fig. 8 be similar to each other, and with the next scheduled submission dates being June 9 at 3:00 a.m. (Question 1), July 2 at 3:00 a.m. (Question 2), and October 2 at 3:00 a.m. (Question 3), respectively, Question 1 be answered on June 9 and the next submission be due in 21 days, which is on June 30. Then Question 2, which is a similar question, is submitted on July 2, but since it is not the same day, there is a risk that learner 4 will not realize that the two questions are similar.

Consequently, with the function of the submission date unification adjustment unit 17a, the submission date of the similar question can be unified. In the specific example above, Question 1 is answered on June 10, and the next submission is due in 21 days, which is on June 30. At this time, the submission date of a question that is present within a certain period of time, for example, within the question interval (here, 21 days) divided by 5, is unified.

Here, with the question interval being 21 days, 21/5 = 4.2 days, which is 4 days when rounded down, the 4 days before and after June 30 are determined to be within the predetermined interval range, i.e., the submission date is close. While a relatively short period of 21 days is used as an example here, the longer the question interval becomes using a multiplying factor or the like, the function of the submission date unification adjustment unit 17a becomes more effective.

For example, when the question interval is 365 days due to the multiplying factor, the submission date of the similar question within a range of 73 days, computed from 365/5 = 73 days, or approximately two months, can be unified.

The operation of the learning support system 10a in the above configuration will now be explained. The learning support system 10a has the same configuration as the learning support system 10, and therefore allows the learner 4 to learn efficiently to carry out lifelong learning.

Here, according to the functions of the question interval determination unit 14 and the question frequency adjustment unit 16, the question interval varies according to random numbers and multiplying factors. Since with these functions, questions similar to each other are often submitted separately, it is preferable that similar questions that are present within a predetermined range be submitted on a unified, same day.

To address such an issue, according to the learning support system 10a, if the submission date of the questions similar to the question that the learner has answered correctly is present within a predetermined range based on the next submission date of the correctly answered question, the submission date unification adjustment unit 17a adjusts the question interval so that the submission dates of the correctly answered question and the questions similar to this are aligned.

This allows the learner 4 to solve similar questions on the same day and understand the relationships between these similar questions, resulting in the significant effect of learning efficiently.

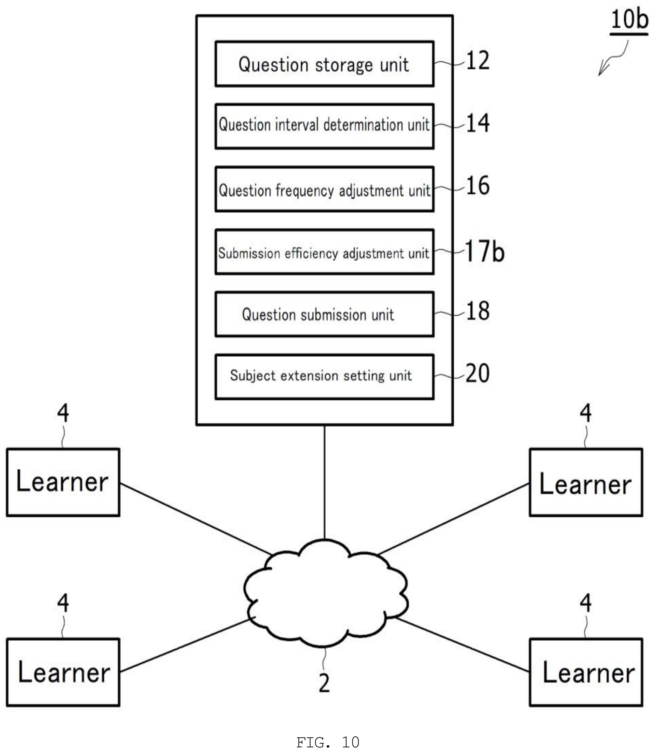

Fig. 10 is a diagram illustrating a learning support system 10b involving the present invention. The learning support system 10b includes a question storage unit 12, a question interval determination unit 14, a question frequency adjustment unit 16, a submission efficiency adjustment unit 17b, a question submission unit 18, and a subject extension setting unit 20. Here, the difference of the learning support system 10b from the learning support system 10 is the submission efficiency adjustment unit 17b, and therefore the explanation will mainly focus on the submission efficiency adjustment unit 17b.

The submission efficiency adjustment unit 17b has a function of adjusting the question interval so that submission of a plurality of similar questions is delayed if the correct answer rate of the plurality of similar questions is high.

Specifically, the submission efficiency adjustment unit 17b has a function of delaying, if an average correct answer rate, obtained by averaging per-question-basis correct answer rates when the plurality of similar questions are each solved multiple times, exceeds a predetermined reference value, the submission date by multiplying an adjustment value, which is obtained by dividing the average correct answer rate by a predetermined value, by the number of days until the next submission of each question. The submission efficiency adjustment unit 17b also has a function of determining a predetermined value such that the adjustment value (multiplying factor) falls between 1 and 2.

For example, in the questions illustrated in Fig. 8, it is assumed that the learner himself/herself use the function of the question storage unit 12 to register Question 1, which is highly similar to a question registered in the past and is sufficiently understood, and Question 2, which is insufficiently understood. Under such circumstances, Questions 1 and Question 2 will be submitted at similar question intervals, even if there is some time lag due to random numbers, but repeatedly submitting Question 2 and Question 1 at the same question intervals cannot be regarded as efficient.

As one way to solve this problem, it is preferable that the frequency of the questions be reduced when the comprehension of similar questions is above a certain level. Specifically, the question interval is multiplied by a predetermined multiplying factor depending on the comprehension of similar questions.

As a method for determining the comprehension of similar questions, even with a five-point scale or a two-point scale of 0 or 100, regularly registering the comprehension for every question would be cumbersome for learners, so at present the comprehension is deemed to be equivalent to the average correct answer rate of similar questions.

Additionally, as a method for determining the multiplying factor, questions are sorted by similarity score in descending order and the correct answer rate of the top eight questions is computed. If the average correct answer rate of the similar questions exceeds 80%, the submission efficiency adjustment unit 17b then multiplies the multiplying factor by a value calculated as the similar questions average correct answer rate divided by 55. For example, if the average correct answer rate of the similar questions is 80%, a multiplier of 80/5 ≈ 1.5 times (adjustment value) is applied. Similarly, if the average correct answer rate of the similar questions is 95%, a multiplier of 95/55 = 1.8 times (adjustment value) is applied.

In the questions illustrated in Fig. 8, if the correct answer rate of Question 1 is 100% and the correct answer rate of Question 2 is 83%, the similar question average correct answer rate of these two questions is (100 + 83) / 2 = 91.5%.

If the average correct answer rate obtained by averaging the per-question-basis correct answer rates when the plurality of similar questions are each solved multiple times exceeds 80%, the submission efficiency adjustment unit 17b delays the submission date by multiplying the adjustment value obtained by dividing the average correct answer rate by 55 by the number of days until the next submission of each question.

As described above, if the correct answer rate of Question 1 is 100%, the correct answer rate of Question 2 is 83%, and Question 3 is answered correctly six times consecutively, meaning a 100% correct answer rate, then the next submission date should be in "40 to 57 days." However, with the function of the submission efficiency adjustment unit 17b, a multiplier of 91.5/55 = 1.66 is applied, and the next submission date will be "in 66 to 94 days." Thereby the original question interval is extended by 26 to 37 days. The reason for extending the period by 26 to 37 days is that the correct answer rate of the similar questions being high indicates a high likelihood of comprehension for this question.

In the above description, the submission efficiency adjustment unit 17b is explained as multiplying by a predetermined multiplying factor to lengthen the question interval, whereas in an instance where it is judged on the basis of the average correct answer rate of similar questions that comprehension is low, if the correct answer rate of certain questions is high, there is a possibility that the learner has merely memorized the question wording and a comprehension of the entirety of the similar questions is not high. While there is also the issue of maintaining motivation, if the correct answer rate of similar questions is below a certain level, it is expected that comprehension will be improved by multiplying the question interval by an adjustment value between 0.5 and 0.9 to reduce the frequency of questions.

For example, if the average correct answer rate of similar questions is less than 60%, the average rate of correct answers of similar questions is divided by 60. Then if the similar question average correct answer rate is 50%, the submission efficiency adjustment unit 17b carries out multiplication by 50/60 ≈ 0.9. Furthermore, if the similar question average correct answer rate is 30%, the submission efficiency adjustment unit 17b carries out multiplication by 30/60 ≈ 0.5.

It is assumed that Question 3 be present and similar questions thereof be Question 1 and Question 2, and that the correct answer rate of Question 1 be 100% and the correct answer rate of Question 2 be 50%. Then, the average correct answer rate of questions similar to Question 3 is (100 + 50) /2 = 50.

Since the submission efficiency adjustment unit 17b carries out multiplication by 0.9 if the similar question average correct answer rate is 50, assuming that the next scheduled submission date of Question 3 be in 50 days, then as in 50 x 0.9 = 45 days, the question interval is shortened. The reason for making such adjustments is that if the correct answer rate of questions that have been determined to be similar questions is low, by focusing on solving questions in this area, efficient and systematical learning can be realized.

The operation of the learning support system 10b in the above configuration will now be explained. The learning support system 10b has the same configuration as the learning support system 10, and therefore allows the learner 4 to learn efficiently to carry out lifelong learning.

Here, according to the functions of the question interval determination unit 14 and the question frequency adjustment unit 16, the question interval varies according to random numbers and multiplying factors. With these functions, similar questions are often submitted separately. Therefore, it is preferable that if it is judged that the average correct answer rate of the similar questions is high and thus the comprehension is high, the question interval of these similar questions be lengthened, and if it is judged that the average correct answer rate is low and thus the comprehension is low, the question interval of these similar questions be similarly shortened.

Consequently, according to the learning support system 10b, with the function of the submission efficiency adjustment unit 17b, if the average correct answer rate of a plurality of similar questions is high, the question interval is multiplied by a number from 1 to 2 to be lengthened, while if the average correct answer rate of the plurality of similar questions is low, the question interval is multiplied by a number from 0.5 to 0.9 to be shortened. This has the advantage that it enables more efficient memorization and efficient maintenance of memory.

### LIST OF REFERENCE NUMERALS

4: Learner, 10, 10a, 10b: Learning support system, 12: Question storage unit, 14: Question interval determination unit, 16: Question frequency adjustment unit, 17; Similar question advanced submission adjustment unit, 17a: Submission date unification adjustment unit, 17b Submission efficiency adjustment unit, 18: Question submission unit, 20: Subject extension setting unit

## Claims

1. A learning support system comprising:
a question storage unit in which a plurality of questions for a learner to acquire knowledge and answers respectively corresponding to the plurality of questions are registered;
a question interval determination unit configured to determine, in determining a date for submitting each of the plurality of questions, a question interval such that an effect of learning by the learner is enhanced;
a similar question advanced submission adjustment unit configured to adjust the question interval such that a next submission date of questions similar to a question incorrectly answered by the learner is advanced ahead of schedule to align with the next submission date of the incorrectly answered question; and
a question submission unit configured to submit each of the questions to the learner, based on the question interval determined or adjusted by the question interval determination unit and the similar question advanced submission adjustment unit.

2. The learning support system according to claim 1, wherein
the similar question advanced submission adjustment unit is configured to adjust advanced submission of a question with a higher degree of similarity among the similar questions, if a response to the incorrectly answered question is made at least two times, and a correct answer rate is at a predetermined value or below.

3. The learning support system according to claim 1, wherein
the similar question advanced submission adjustment unit is configured to adjust the advanced submission of a question, among the similar questions, the question interval of which is within a predetermined period.
